(19) Europäisches Patentamt
European Patent Office
Office européen des brevets

(11) **EP 4 471 479 B1**

(12) **EUROPEAN PATENT SPECIFICATION**

(45) Date of publication and mention
of the grant of the patent:
**29.04.2026 Bulletin 2026/18**

(51) International Patent Classification (IPC):
***G02B 9/62*** *(2006.01)*     ***G02B 13/00*** *(2006.01)*
***G02B 13/04*** *(2006.01)*

(21) Application number: **23746117.3**

(22) Date of filing: **17.01.2023**

(52) Cooperative Patent Classification (CPC):
**G02B 9/62; G02B 13/0045; G02B 13/006;
G02B 13/04**

(86) International application number:
**PCT/CN2023/072560**

(87) International publication number:
**WO 2023/143235 (03.08.2023 Gazette 2023/31)**

(54) **OPTICAL LENS**

OPTISCHE LINSE

LENTILLE OPTIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **26.01.2022 CN 202210090900**

(43) Date of publication of application:
**04.12.2024 Bulletin 2024/49**

(73) Proprietor: **Jiangxi Lianchuang Electronic Co.,
Ltd.
Nanchang, Jiangxi 330096 (CN)**

(72) Inventors:
• **CHEN, Weijian
Nanchang, Jiangxi 330096 (CN)**
• **XU, Yuxuan
Nanchang, Jiangxi 330096 (CN)**

(74) Representative: **Plavsa, Olga
Plavsa & Plavsa
Patentna kancelarija
Strumicka 51
11050 Beograd (RS)**

(56) References cited:
WO-A1-2021/157959    CN-A- 107 783 256
CN-A- 108 983 401    CN-A- 108 983 401
CN-A- 111 352 214    CN-A- 111 367 046
CN-A- 111 679 408    CN-A- 111 679 408
CN-A- 112 485 889    CN-A- 113 960 754
CN-A- 113 960 754    CN-A- 114 114 649
CN-U- 204 256 248    CN-U- 212 647 128
CN-U- 212 647 128    US-A1- 2014 029 115
US-A1- 2018 203 209    US-A1- 2019 064 483

**Description**

TECHNICAL FIELD

The disclosure relates to the technical field of imaging lenses, in particular to an optical lens.

BACKGROUND

In recent years, with the rapid development of the automatic driving assistance systems, image algorithms are upgrading. An automotive lens is a key component of the automatic driving assistance system to obtain external information, and it also needs to be upgraded to meet the requirements of the present stage.

At present, for obtaining information in a single direction, the conventional automatic driving assistance system generally depends on a long-focus lens and a wide-angle lens. Although the long-focus lens has a long focal length, it has a small field of view, and it is generally used to capture objects at a long-distance for observation. Although the wide-angle lens has a large field of view, it has a short focal length, and it is generally used to capture objects at a short-distance for observation. Therefore, there is a need to design an optical lens which integrates functions of the long-focus lens and the wide-angle lens, and has a large aperture, a large field of view and a high resolution, so as to replace multiple lenses each having a single function in the traditional automatic driving assistance system. Conventional systems are known in CN 204 256 248 U, which describes an optical lens comprising a first lens, a second lens, a third lens, a fourth lens, a fifth lens and a sixth lens sequentially arranged from an object side to an image side.

SUMMARY

The invention is defined in the appended claims.

Embodiments of the present disclosure provide an optical lens with a large aperture, a large field of view and a high resolution.

For this, the technical solutions of the present disclosure are provided as follows.

The embodiments of the present disclosure provide an optical lens including a total of six lenses. From an object side to an imaging plane along an optical axis of the optical lens, the optical lens sequentially includes: a first lens with a negative refractive power, both an object side surface and the image side surface of the first lens being concave; a second lens with a negative refractive power, an object side surface of the second lens being concave, and an image side surface of the second lens being convex; a third lens with a positive refractive power, both an object side surface and an image side surface of the third lens being convex; a fourth lens with a positive refractive power, both an object side surface and an image side surface of the fourth lens being convex; a fifth lens with a negative refractive power, an object side surface of the fifth lens being concave, and an image side surface of the fifth lens being convex; a sixth lens with a positive refractive power, an object side surface of the sixth lens is convex, and an image side surface of the sixth lens being concave. The fourth lens and the fifth lens are cemented to form a cemented lens. An effective focal length $f$ of the optical lens and a true image height IH corresponding to a maximum field of view of the optical lens meet an expression: $0.55 < f/IH < 0.65$. An aperture HD1 of the object side surface of the first lens corresponding to half of the maximum field of view of the optical lens and an aperture D1 of the object side surface of the first lens corresponding to the maximum field of view meet an expression: $0.5 < HD1/D1 < 0.6$.

Further, the effective focal length $f$ of the optical lens meets an expression: $5.9mm < f < 6.5mm$.

Further, the true image height IH corresponding to the maximum field of view of the optical lens meets an expression: $9.5mm < IH < 10.5mm$.

Further, an f-number of the optical lens meets an expression: $1.7 < FNO < 1.9$.

Further, the effective focal length $f$ of the optical lens and a focal length $f1$ of the first lens meet an expression: $-1.2 < f1/f < -1.0$. A radius of curvature R1 of the object side surface of the first lens and a radius of curvature R2 of the image side surface of the first lens meet an expression: $0.8 < (R1+R2)/(R1-R2) < 0.9$.

Further, the effective focal length $f$ of the optical lens and a focal length $f2$ of the second lens meet an expression: $-18.5 < f2/f < -11.5$. A radius of curvature R3 of the object side surface of the second lens, a radius of curvature R4 of the image side surface of the second lens, and a central thickness CT2 of the second lens meet an expression: $1.05 < R3/(R4+CT2) < 1.20$.

Further, the effective focal length $f$ of the optical lens, a focal length $f3$ of the third lens, and a radius of curvature R5 of the object side surface of the third lens meet expressions: $2.0 < f3/f < 2.2$, and $1.10 < R5/f3 < 1.25$.

Further, the effective focal length $f$ of the optical lens and a focal length $f4$ of the fourth lens meet an expression: $1.2 < f4/f < 1.9$.

Further, the effective focal length $f$ of the optical lens and a focal length $f5$ of the fifth lens, a radius of curvature R9 of the object side surface of the fifth lens, and a radius of curvature R10 of the image side surface of the fifth lens meet

expressions: $-2.2<f5/f<-1.8$, and $1.10<R10/(R9+f5)<1.35$.

Further, the effective focal length $f$ of the optical lens and a focal length $f6$ of the sixth lens, a radius of curvature R11 of the object side surface of the sixth lens and a radius of curvature R12 of the image side surface of the sixth lens meet expressions: $2.8<f6/f<3.9$, and $-3.0 < (R11+R12)/(R11-R12) < -1.0$.

Different from the related art, the embodiments of the present disclosure have beneficial effects as follow: a large aperture, a large field angle of view and a high resolution of the optical lens are enabled by reasonably matching lens shapes among the lenses and combining the refractive power of various lenses.

A part of additional aspects and advantages of the present disclosure are set forth in part in the description below, and a part thereof would become apparent from the description below, or may be learned by practice of the present disclosure.

BRIEF DESCRIPTION OF THE DRAWINGS

The above and/or additional aspects and advantages of the present disclosure would become apparent and easily understood from the following description of the embodiments in combination with the drawings, in which:

FIG. 1 is a schematic diagram illustrating a structure of an optical lens according to Embodiment 1 of the present disclosure.

FIG. 2 is a graph of field curvatures of the optical lens according to Embodiment 1 of the present disclosure.

FIG. 3 is a graph of axial aberrations of the optical lens according to Embodiment 1 of the present disclosure.

FIG. 4 is a graph of lateral chromatic aberrations of the optical lens according to Embodiment 1 of the present disclosure.

FIG. 5 is a graph of Modulation Transfer Function (MTF) of the optical lens according to Embodiment 1 of the present disclosure.

FIG. 6 is a schematic view illustrating a structure of an optical lens according to Embodiment 2 of the present disclosure.

FIG. 7 is a graph of field curvatures of the optical lens according to Embodiment 2 of the present disclosure.

FIG. 8 is a graph of axial aberrations of the optical lens according to Embodiment 2 of the present disclosure.

FIG. 9 is a graph of lateral chromatic aberrations of the optical lens according to Embodiment 2 of the present disclosure.

FIG. 10 is a graph of MTF of the optical lens according to Embodiment 2 of the present disclosure.

FIG. 11 is a schematic view illustrating a structure of an optical lens according to Embodiment 3 of the present disclosure.

FIG. 12 is a graph of field curvature of the optical lens according to Embodiment 3 of the present disclosure.

FIG. 13 is a graph of axial aberrations of the optical lens according to Embodiment 3 of the present disclosure.

FIG. 14 is a graph of lateral chromatic aberrations of the optical lens according to Embodiment 3 of the present disclosure.

FIG. 15 is a graph of MTF of the optical lens according to Embodiment 3 of the present disclosure.

FIG. 16 is a schematic view illustrating a structure of an optical lens according to Embodiment 4 of the present disclosure.

FIG. 17 is a graph of field curvatures of the optical lens according to Embodiment 4 of the present disclosure.

FIG. 18 is a graph of axial aberrations of the optical lens according to Embodiment 4 of the present disclosure.

FIG. 19 is a graph of lateral chromatic aberrations of the optical lens according to Embodiment 4 of the present disclosure.

FIG. 20 is a graph of MTF of the optical lens according to Embodiment 4 of the present disclosure.

The disclosure will be further described by the following specific embodiments in combination with the accompanying drawings.

DETAILED DESCRIPTION OF PREFERRED EMBODIMENTS

In order to better understand the disclosure, various aspects of the present disclosure will be described in more detail with reference to the drawings. It is understandable that these detailed descriptions are only descriptions of embodiments of the present disclosure, which are not intended to limit the scope of the present disclosure in any way. Throughout the specification, the same reference numerals refer to the same elements. The expression "and/or" includes any and all combinations of one or more of related listed items.

It is notable that, in the specification, the expressions of "first", "second", "third", etc. are only used to distinguish one feature from another, and do not mean any limitation on the features. Therefore, a first lens discussed below may also be called as a second lens or a third lens without departing from the teaching of the present disclosure.

In the drawings, for convenience of explanation, the thickness, size and shape of the lenses are slightly exaggerated. Specifically, spherical shapes or aspherical shapes illustrated in the drawings are exemplary. That is, the spherical shape(s)) or aspherical shape(s) are not limited to those illustrated in the drawings. The drawings are only exemplary and are not drawn strictly to scale.

Herein, a paraxial region refers to a region near the optical axis. If a surface of the lens is convex and a convex position of the surface is not defined, it means that the surface of the lens is convex at least in the paraxial region. If a surface of the lens is concave and a concave position of the surface is not defined, it means that the surface of the lens is concave at least in the paraxial region. A surface of each lens closest to the to-be-captured object is referred to as an object side surface of the lens, and a surface of each lens closest to the imaging plane is referred to as an image side surface of the lens.

It is notable that the embodiments of the present disclosure and the features in the embodiments may be combined with each other without conflict. The present disclosure will be described in detail with reference to the drawings and embodiments hereafter.

An optical lens provided in the embodiments of the present disclosure includes sequentially, from an object side surface to an imaging surface: a first lens, a second lens, a third lens, a fourth lens, a fifth lens and a sixth lens.

In some embodiments, the first lens has a negative refractive power, and has a concave object side surface and a concave image side surface. Such refractive power and surfaces of the first lens are beneficial to collect light from a large field of view as much as possible to enter the following optical lenses.

In some embodiments, the second lens has a negative refractive power, and has a concave object side surface and a convex image side surface. Such refractive power and surfaces of the second lens are beneficial to collect the light incident from the first lens, and make a travel path of the light have a smooth transition. This is also beneficial to reduce a front aperture of the optical lens, and reduce a volume of the optical lens, which is helpful in miniaturization of the optical lens and reduction of the cost.

In some embodiments, the third lens has a positive refractive power, and has a convex object side surface and a convex image side surface. Such refractive power and surfaces of the third lens are beneficial to converge the light, and make the diverged lights enter the subsequent light path, that is, a smooth transition is provided in the travel path of the light.

In some embodiments, the fourth lens has a positive refractive power, and has a convex object side surface and a convex image side surface. Such refractive power and surfaces of the fourth lens are beneficial to converge the light, and make the diverged lights enter the subsequent light path, that is, a smooth transition is further provided in the travel path of the light.

In some embodiments, the fifth lens has a negative refractive power, and has a concave object side surface and a convex image side surface. Such refractive power and surfaces of the fifth lens plays a certain role in correcting aberration, and are beneficial to avoid the light from being too divergent in the subsequent light path.

In some embodiments, the image side surface of the fourth lens and the object side surface of the fifth lens are cemented to each other. By combining the fourth lens and the fifth lens into a cemented lens, it takes charge of the overall chromatic aberration correction of the optical system, and effectively corrects the aberration. It also alleviates problems of tolerance sensitivity such as tilt/off-of-center of the lenses caused during assembly, and improves the production yield.

In some embodiments, the sixth lens has a positive refractive power and has a convex object side surface and a concave image side surface. Such refractive power and surfaces of the sixth lens are beneficial to effectively transmit more light to the imaging plane, correct astigmatism and field curvature, and improve the image resolving ability of the optical lens. The sixth lens has aspherical surfaces, which is beneficial to the flatness of the surfaces, and can eliminate the aberration that occurs during imaging, thus improving the imaging quality of the optical lens.

In some embodiments, a stop is provided between the second lens and the fourth lens, and the stop is configured to limit the beam of the light. This further improves the imaging quality of the optical lens. When the stop is provided between the second lens and the fourth lens, it is beneficial to gather the light entering the optical system, and reduce the front aperture of the optical lens.

In some embodiments, an effective focal length $f$ of the optical lens meets an expression: 5.9 mm<$f$<6.5 mm. This is helpful to improve the ability of the lens in highlighting a subject and an ability in shooting a distant scene.

In some embodiments, an f-number of the optical lens meet an expression: 1.7<FNO<1.9. This ensures an illuminance at an edge imaging region of the optical lens while having both a long focal length and a large field of view.

In some embodiments, a true image height IH corresponding to the maximum field of view meets an expression: 9.5 mm<IH<10.5 mm. This is beneficial to realize an imaging effect of a large imaging plane of the optical lens, thus having high optical performance. It can further enable the optical lens to match image sensors of different specifications.

In some embodiments, a chief ray angle CRA on the imaging plane at a full field of view of the optical lens meets an expression: 0°<CRA<6.5°. This can bring a large allowable error between the CRA of the optical lens and a CRA of a chip sensor, and can also ensure the illumination at an edge imaging region.

In some embodiments, the effective focal length $f$ of the optical lens and the true image height IH corresponding to the maximum field of view meets an expression: 0.55<$f$/IH<0.65. This can ensure that the optical lens has a large imaging surface, and meets an imaging requirement of a chip having a large target plane.

In some embodiments, a sum ΣCT of center thicknesses of all the lenses and a total track length TTL of the optical lens meet an expression: 0.55<ΣCT/TTL<0.70. This is beneficial to short the total length of the optical lens.

In some embodiments, an aperture HD1 of the object side surface of the first lens corresponding to half of the maximum field of view of the optical lens and an aperture D1 of the object side surface of the first lens corresponding to the maximum field of view meet an expression: 0.5<HD1/D1<0.6. This can ensure that a central field of view of the optical lens is concentrated near the optical axis, enable coma and astigmatism to be reduced as much as possible, and also enable a great illumination of an edge field of view.

In some embodiments, the effective focal length $f$ of the optical lens and a focal length $f1$ of the first lens meet an expression: -1.2<$f1/f$<-1.0. This enables the first lens to have a small negative refractive power, and is beneficial to increase the back focal length of the optical lens.

In some embodiments, the effective focal length $f$ of the optical lens and a focal length $f2$ of the second lens meet an expression: -18.5<$f2/f$<-11.5. This enables the second lens to have a large negative refractive power, which is beneficial to balance the astigmatism and field curvature of the optical lens.

In some embodiments, the effective focal length $f$ of the optical lens and a focal length $f3$ of the third lens meet an expression: 2.0<$f3/f$<2.2. This enables the third lens to have a small positive refractive power, which is beneficial to balance various aberrations of the optical lens.

In some embodiments, the effective focal length $f$ of the optical lens and a focal length $f4$ of the fourth lens meet an expression: 1.2<$f4/f$<1.9. This enables the fourth lens to have a small positive refractive power, which is beneficial to balance various aberrations of the optical lens.

In some embodiments, the effective focal length $f$ of the optical lens and a focal length $f5$ of the fifth lens meet an expression: -2.2<$f5/f$<-1.8. This enables the fifth lens to have a small negative refractive power, which is beneficial to correct the aberration caused its previous lenses, and avoid the light from being too divergent in the subsequent light path.

In some embodiments, the effective focal length $f$ of the optical lens and a focal length $f6$ of the sixth lens meet an expression: 2.8<$f6/f$<3.9. This enables the sixth lens to have a large positive refractive power, which is beneficial to balance the astigmatism and field curvature of the optical lens.

In some embodiments, a radius of curvature R1 of the object side surface of the first lens and a radius of curvature R2 of the image side surface of the first lens meet an expression: 0.8< (R1+R2)/(R1-R2) <0.9. This is beneficial to increase the field of view of the optical lens, balance the spherical aberration and field curvature of the optical lens, and improve the imaging quality of the optical lens.

In some embodiments, a radius of curvature R3 of the object side surface, a radius of curvature R4 of the image side surface of the second lens, and a central thickness CT2 of the second lens meet an expression: 1.05<R3/(R4+CT2) <1.20. This is beneficial to make shapes of the object-side surface and the image side surface of the second lens be approximately concentric circles, balance the astigmatism and field curvature generated by the second lens, and improve the imaging quality of the optical lens.

In some embodiments, a radius of curvature R5 of the object side surface of the third lens and the focal length $f3$ of the third lens in the optical lens meet an expression: 1.10<R5/f3<1.25. This is beneficial to reduce a sensitivity of the third lens, balance various aberrations of the optical lens, and improve the imaging quality of the optical lens.

In some embodiments, a radius of curvature R10 of the image side surface of the fifth lens and the focal length *f*5 of the fifth lens meet an expression: 1.10<R10/(R9+f5)<1.35. This is beneficial to control the refraction angle of the light at the fifth lens, balance various aberrations generated by the fifth lens, and improve the imaging quality of the optical lens.

In some embodiments, a radius of curvature R11 of the object side surface and a radius of curvature R12 of the image side surface of the sixth lens in the optical lens meet an expression: -2.0< (R11+R12)/(R11-R12) <-1.0. This enables the image side surface of the sixth lens to be flat, enables a distortion at an edge of the optical lens to be optimized, balances the field curvature of the optical lens, corrects the astigmatism, and improves the imaging quality of the optical lens.

In some embodiments, a center thickness CT3 of the third lens and the total track length TTL of the optical lens meet an expression: 0.08≤CT3/TTL≤0.26. This is beneficial to correct the field curvature by the thick third lens.

In some embodiments, a center thickness CT4 of the fourth lens and the total track length TTL of the optical lens meet an expression: 0.11≤CT4/TTL≤0.16. This is beneficial to correct the field curvature by the thick fourth lens.

In some embodiments, a center thickness CT6 of the sixth lens and the total track length TTL of the optical lens meet an expression: 0.11≤CT6/TTL≤0.2. This is beneficial to correct the field curvature by the thick sixth lens.

In order to make the optical system have good optical performances, multiple aspheric lenses are used in the optical lens, and a shape of each aspheric surface of the optical lens meets the following equation:

$$z = \frac{ch^2}{1+\sqrt{1-(1+K)c^2h^2}} + Ah^2 + Bh^4 + Ch^6 + Dh^8 + Eh^{10} + Fh^{12}$$

where Z represents a distance between a position on the surface and a vertex of the surface along the optical axis, h represents a distance from the optical axis to the position on the surface, c represents the curvature of the vertex of the surface, K represents a quadratic surface coefficient, A represents a second-order surface coefficient, B represents a fourth-order surface coefficient, C represents a sixth-order surface coefficient, D represents an eighth-order surface coefficient, E represents a tenth-order surface coefficient, and F represents a twelfth-order surface coefficient.

The present disclosure will be further described below in several embodiments below. In the various embodiments, the thickness, the radius of curvature, and the material selection of each lens in the optical lens are different, which may refer to the parameter table of the respective embodiments. The following embodiments just illustrate preferred implementations of the present disclosure. However, the implementations of the present disclosure are not limited only by the following embodiments, and any other variations, substitutions, combinations or simplifications, that are made without departing from the concept of the present disclosure, should be regarded as equivalent implementations, and fall within the protection scope of the present disclosure.

EMBODIMENT 1

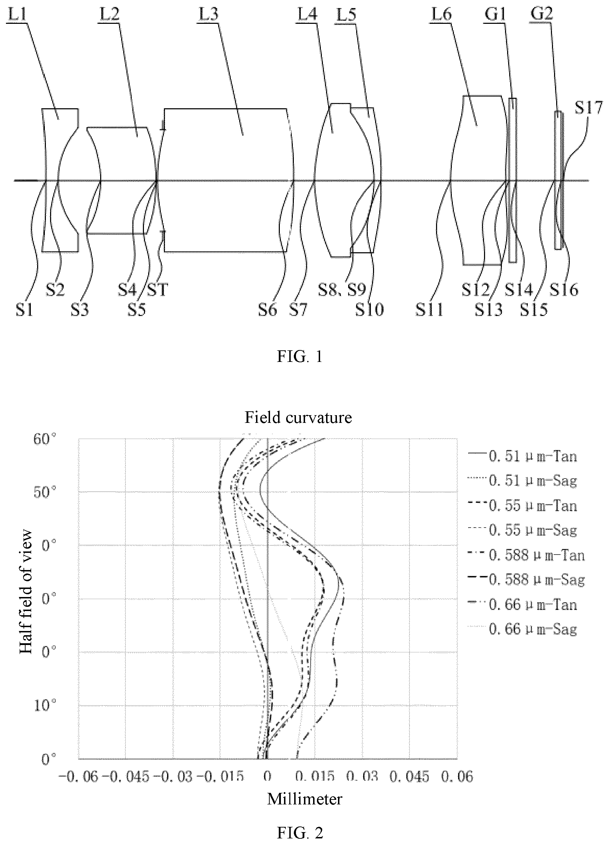

Referring to FIG. 1, the structure of an optical lens provided in Embodiment 1 of the present disclosure is illustrated. From an object side to an imaging plane along an optical axis, the optical lens sequentially includes: a first lens L1, a second lens L2, a stop ST, a third lens L3, a fourth lens L4, a fifth lens L5, a sixth lens L6, a filter G1 and a protective glass G2.

The first lens L1 has a negative refractive power. The object side surface S1 of the first lens L1 is concave, and the image side surface S2 of the first lens is concave. The second lens L2 has a negative refractive power. The object side surface S3 of the second lens L2 is concave, and the image side surface S4 of the second lens L2 is convex. Then is the stop ST. The third lens L3 has a positive refractive power. Both the object side surface S5 and the image side surface S6 of the third lens L3 are convex. The fourth lens L4 has a positive refractive power. Both the object side surface S7 and the image side surface S8 of the fourth lens L4 are convex. The fifth lens L5 has a negative refractive power. The object side surface S9 of the fifth lens L5 is concave, and the image side surface S10 of the fifth lens L5 is convex. The sixth lens L6 has a positive refractive power. The object side surface S11 of the sixth lens L6 is convex, and the image side surface S12 of the sixth lens L6 is concave. The fourth lens L4 and the fifth lens L5 may be cemented to form a cemented lens.

The relevant parameters of each lens in the optical lens provided in Embodiment 1 of the present disclosure are shown in Table 1-1.

Table 1-1

| Surface No. | | Surface type | Radius of curvature R (mm) | Thickness D/ Distance L(mm) | Refractive index Nd | Abbe number Vd |
|---|---|---|---|---|---|---|
| | Object plane | Plane | Infinity | Infinity | | |
| S1 | First lens | Spherical surface | -71.51 | 1.00 | 1.76 | 52.34 |
| S2 | | Spherical surface | 5.86 | 3.27 | | |
| S3 | Second lens | Spherical surface | -7.47 | 4.31 | 1.50 | 81.61 |
| S4 | | Spherical surface | -10.80 | 0.51 | | |
| ST | Stop | Plane | Infinity | -0.41 | | |
| S5 | Third lens | Spherical surface | 14.89 | 10.48 | 1.88 | 40.81 |
| S6 | | Spherical surface | -27.56 | 1.67 | | |
| S7 | Fourth lens Fifth lens | Spherical surface | 13.71 | 4.59 | 1.50 | 81.61 |
| S8/S9 | | Spherical surface | -7.92 | 0.53 | 1.95 | 17.94 |
| S10 | | Spherical surface | -23.51 | 5.40 | | |
| S11 | Sixth lens | Aspheric surface | 12.96 | 4.28 | 1.81 | 40.73 |
| S12 | | Aspheric surface | 57.68 | 0.25 | | |
| S13 | Filter | Plane | Infinity | 0.50 | 1.52 | 64.20 |
| S14 | | Plane | Infinity | 3.00 | | |
| S15 | Protective glass | Plane | Infinity | 0.50 | 1.52 | 64.20 |
| S16 | | Plane | Infinity | 0.13 | | |
| S17 | Imaging plane | Plane | Infinity | | | |

The parameters of surfaces of the aspheric lenses in the optical lens provided in Embodiment 1 of the present disclosure are shown in Table 1-2.

Table 1-2

| Surface No. | K | A | B | c | D | E | F |
|---|---|---|---|---|---|---|---|
| S11 | -15.29 | 0.00E+00 | 5.94E-04 | -3.05E-05 | 8.18E-07 | -1.62E-08 | 1.32E-10 |
| S12 | -0.52 | 0.00E+00 | -3.29E-04 | -8.10E-06 | 1.72E-07 | -2.75E-09 | 2.58E-11 |

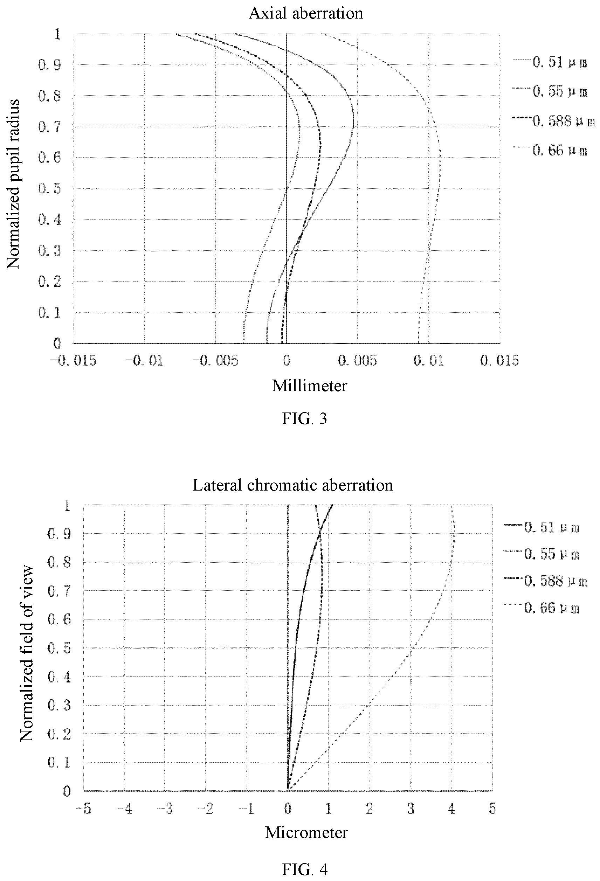

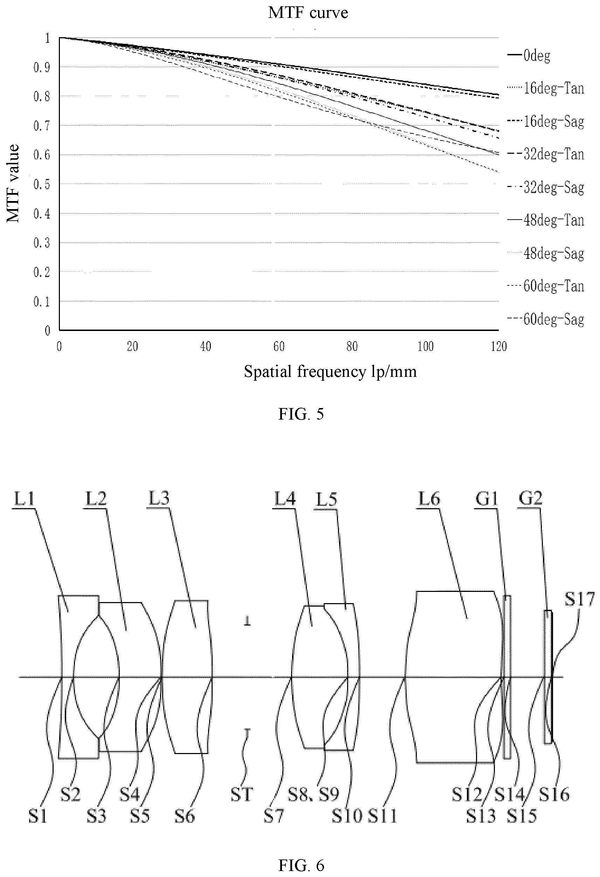

In the embodiment, the field curvature curves of the optical lens are shown in FIG. 2, the axial aberration curves of the optical lens are shown in FIG. 3, the lateral chromatic aberration curves of the optical lens are shown in FIG. 4, and the MTF curves of the optical lens are shown in FIG. 5.

The field curvature curves of Embodiment 1 are illustrated in FIG. 2, which represent curvature degrees of light at different wavelengths on a meridional plane and a sagittal plane. The horizontal axis represents an offset (unit: millimeter), and the vertical axis represents a half field of view (unit: degree (°)). It can be seen from the graph that the field curvatures of the meridional plane and the sagittal plane are within ±0.03 mm, which shows that the field curvatures of the optical lens are well corrected.

The axial aberration curves of Embodiment 1 are illustrated in FIG. 3, which represent aberrations on the optical axis at the imaging plane. The horizontal axis represents the axial aberration (unit: millimeter), and the vertical axis represents the normalized pupil radius. It can be seen from the graph that an offset of the axial aberration is within ±0.015 mm, which shows that optical lens can effectively correct the axial aberration thereof.

The lateral chromatic aberration curves of Embodiment 1 are illustrated in FIG. 4, which represent chromatic aberrations of various wavelengths, relative to a center wavelength (0.55 μm), at different image heights on the imaging plane. The horizontal axis represents the lateral chromatic aberrations (unit: micrometer) of each wavelength relative to the center wavelength, and the vertical axis represents a normalized field of view. It can be seen from the graph that the lateral chromatic aberrations of the longest wavelength and the shortest wavelength are all within ±5 μm, which shows

**EP 4 471 479 B1**

that the optical lens can effectively correct the chromatic aberration of the edge field of view and the secondary spectrum of the entire imaging plane.

The MTF curves of Embodiment 1 are illustrated in FIG. 5, which represent imaging modulation of the optical lens at different spatial frequencies and different fields of view. The horizontal axis represents spatial frequency (unit: lp/mm), and the vertical axis represents MTF value. It can be seen from the graph that the MTF values in the embodiment are all above 0.5 in the full field of view. In a range of (0-120) lp/mm, the MTF curves uniformly and smoothly decrease from the center to the edge field of view. A good imaging quality and a good detail resolution capability are all enabled at either a low frequency or a high frequency.

EMBODIMENT 2

Referring to FIG. 6, the structure of the optical lens provided in Embodiment 2 of the present disclosure is illustrated. From an object side to an imaging plane along an optical axis, the optical lens sequentially includes: a first lens L1, a second lens L2, a third lens L3, a stop ST, a fourth lens L4, a fifth lens L5, a sixth lens L6, a filter G1 and a protective glass G2.

The first lens L1 has a negative refractive power. The object side surface S1 of the first lens L1 is concave, and the image side surface S2 of the first lens is concave. The second lens L2 has a negative refractive power. The object side surface S3 of the second lens L2 is concave, and the image side surface S4 of the second lens L2 is convex. The third lens L3 has a positive refractive power. Both the object side surface S5 and the image side surface S6 of the third lens L3 are convex. Then is the stop ST. The fourth lens L4 has a positive refractive power. Both the object side surface S7 and the image side surface S8 of the fourth lens L4 are convex. The fifth lens L5 has a negative refractive power. The object side surface S9 of the fifth lens L5 is concave, and the image side surface S10 of the fifth lens L5 is convex. The sixth lens L6 has a positive refractive power. The object side surface S11 of the sixth lens L6 is convex, and the image side surface S12 of the sixth lens L6 is concave. The fourth lens L4 and the fifth lens L5 may be cemented to form a cemented lens.

The relevant parameters of each lens in the optical lens provided in Embodiment 2 of the present disclosure are shown in Table 2-1.

Table 2-1

| Surface No. | | Surface type | Radius of curvature R (mm) | Thickness D/ Distance L(mm) | Refractive index Nd | Abbe number Vd |
|---|---|---|---|---|---|---|
| | Object plane | Plane | Infinity | Infinity | | |
| S1 | First lens | Spherical surface | -79.42 | 1.00 | 1.84 | 42.73 |
| S2 | | Spherical surface | 6.24 | 3.64 | | |
| S3 | Second lens | Spherical surface | -7.29 | 3.46 | 1.73 | 54.67 |
| S4 | | Spherical surface | -10.19 | 0.10 | | |
| S5 | Third lens | Spherical surface | 15.99 | 4.02 | 1.91 | 35.25 |
| S6 | | Spherical surface | -42.59 | 2.93 | | |
| ST | Stop | Plane | Infinity | 3.66 | | |
| S7 | Fourth lens Fifth lens | Spherical surface | 14.30 | 4.50 | 1.60 | 65.46 |
| S8/S9 | | Spherical surface | -7.88 | 0.98 | 1.95 | 17.94 |
| S10 | | Spherical surface | -26.54 | 3.74 | | |
| S11 | Sixth lens | Aspheric surface | 14.83 | 7.92 | 1.81 | 40.73 |
| S12 | | Aspheric surface | 238.10 | 0.13 | | |
| S13 | Filter | Plane | Infinity | 0.50 | 1.52 | 64.20 |
| S14 | | Plane | Infinity | 2.79 | | |
| S15 | Protective glass | Plane | Infinity | 0.50 | 1.52 | 64.20 |
| S16 | | Plane | Infinity | 0.13 | | |
| S17 | Imaging plane | Plane | Infinity | | | |

The parameters of surfaces of the aspheric lenses in the optical lens provided in Embodiment 2 of the present disclosure are shown in Table 2-2.

Table 2-2

| Surface No. | K | A | B | C | D | E | F |
|---|---|---|---|---|---|---|---|
| S11 | -2.89 | 0.00E+00 | -9.51E-05 | -1.71E-06 | 2.26E-08 | -1.39E-09 | 9.50E-12 |
| S12 | -33.60 | 0.00E+00 | -4.32E-04 | -4.07E-06 | 7.88E-08 | -1.69E-10 | -2.72E-12 |

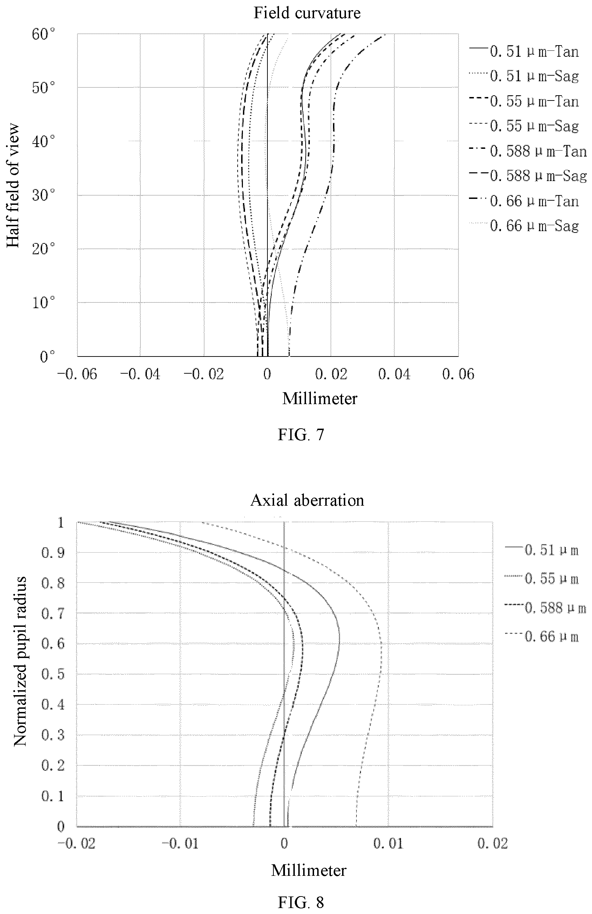

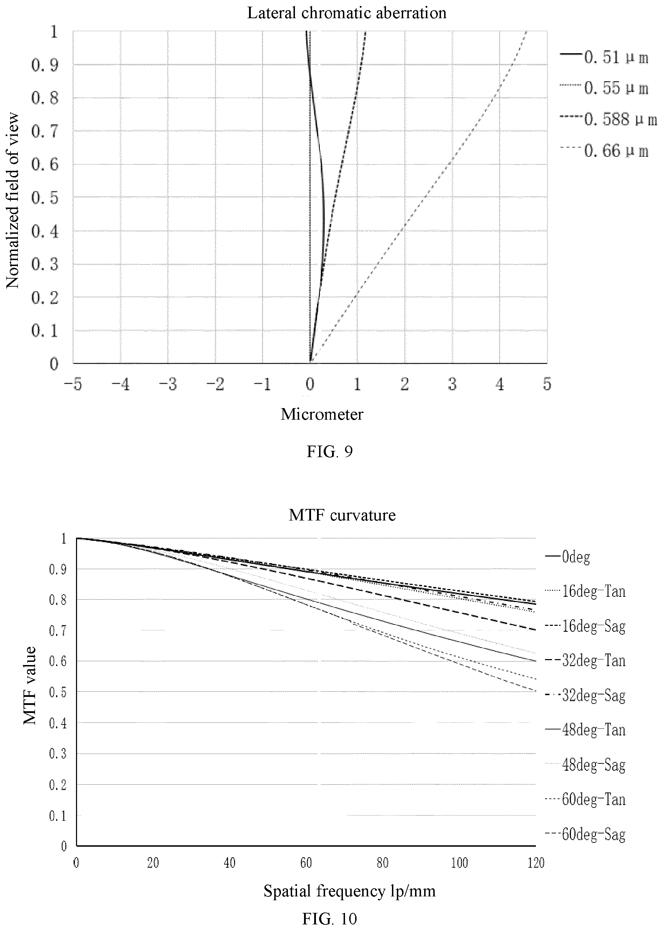

In the embodiment, the field curvature curves of the optical lens are shown in FIG. 7, the axial aberration curves of the optical lens are shown in FIG. 8, the lateral chromatic aberration curves of the optical lens are shown in FIG. 9, and the MTF curves of the optical lens are shown in FIG. 10.

The field curvature curves of Embodiment 2 are illustrated in FIG. 7, which represent curvature degrees of light at different wavelengths on a meridional plane and a sagittal plane. The horizontal axis represents an offset (unit: millimeter), and the vertical axis represents a half field of view (unit: degree (°)). It can be seen from the graph that the field curvatures of the meridional plane and the sagittal plane are within $\pm 0.04$ mm, which shows that the field curvatures of the optical lens are well corrected.

The axial aberration curves of Embodiment 2 are illustrated in FIG. 8, which represent aberrations on the optical axis at the imaging plane. The horizontal axis represents the axial aberration (unit: millimeter), and the vertical axis represents the normalized pupil radius. It can be seen from the graph that an offset of the axial aberration is within $\pm 0.02$ mm, which shows that optical lens can effectively correct the axial aberration thereof.

The lateral chromatic aberration curves of Embodiment 2 are illustrated in FIG. 9, which represent chromatic aberrations of various wavelengths, relative to a center wavelength (0.55 $\mu$m), at different image heights on the imaging plane. The horizontal axis represents the lateral chromatic aberrations (unit: micrometer) of each wavelength relative to the center wavelength, and the vertical axis represents a normalized field of view. It can be seen from the graph that the lateral chromatic aberrations of the longest wavelength and the shortest wavelength are all within $\pm 5$ $\mu$m, which shows that the optical lens can effectively correct the chromatic aberration of the edge field of view and the secondary spectrum of the entire imaging plane.

The MTF curves of Embodiment 2 are illustrated in FIG. 10, which represent imaging modulation of the optical lens at different spatial frequencies and different fields of view. The horizontal axis represents spatial frequency (unit: lp/mm), and the vertical axis represents MTF value. It can be seen from the graph that the MTF values in the embodiment are all above 0.5 in the full field of view. In a range of (0-120) lp/mm, the MTF curves uniformly and smoothly decrease from the center to the edge field of view. A good imaging quality and a good detail resolution capability are all enabled at either a low frequency or a high frequency.

EMBODIMENT 3

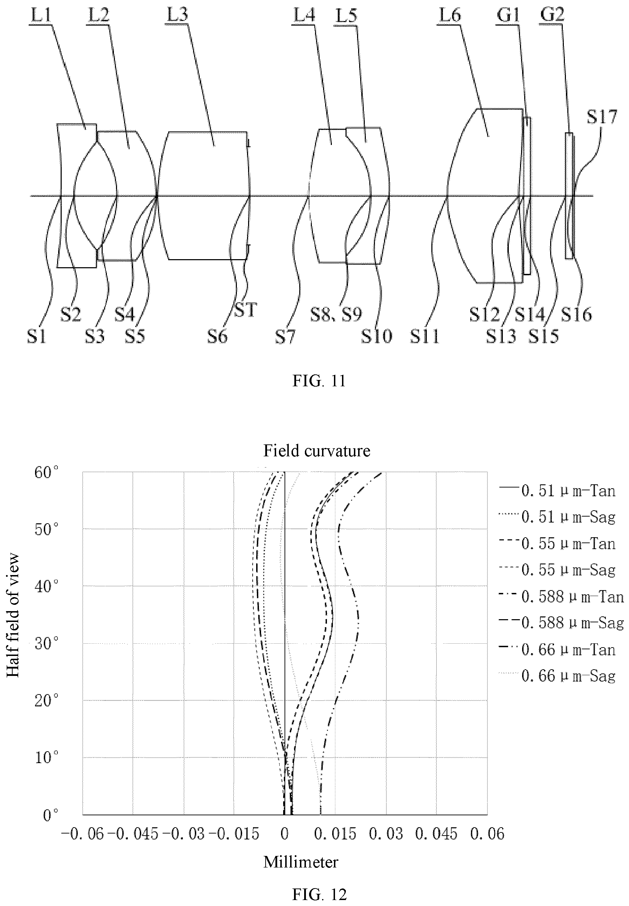

Referring to FIG. 11, the structure of the optical lens provided in Embodiment 3 of the present disclosure is illustrated. From an object side to an imaging plane along an optical axis, the optical lens sequentially includes: a first lens L1, a second lens L2, a third lens L3, a stop ST, a fourth lens L4, a fifth lens L5, a sixth lens L6, a filter G1 and a protective glass G2.

The first lens L1 has a negative refractive power. The object side surface S1 of the first lens L1 is concave, and the image side surface S2 of the first lens is concave. The second lens L2 has a negative refractive power. The object side surface S3 of the second lens L2 is concave, and the image side surface S4 of the second lens L2 is convex. The third lens L3 has a positive refractive power. Both the object side surface S5 and the image side surface S6 of the third lens L3 are convex. Then is the stop ST. The fourth lens L4 has a positive refractive power. Both the object side surface S7 and the image side surface S8 of the fourth lens L4 are convex. The fifth lens L5 has a negative refractive power. The object side surface S9 of the fifth lens L5 is concave, and the image side surface S10 of the fifth lens L5 is convex. The sixth lens L6 has a positive refractive power. The object side surface S11 of the sixth lens L6 is convex, and the image side surface S12 of the sixth lens L6 is concave. The fourth lens L4 and the fifth lens L5 may be cemented to form a cemented lens.

The relevant parameters of each lens in the optical lens provided in Embodiment 3 of the present disclosure are shown in Table 3-1.

Table 3-1

| Surface No. | | Surface type | Radius of curvature R (mm) | Thickness D/ Distance L(mm) | Refractive index Nd | Abbe number Vd |
|---|---|---|---|---|---|---|
| | Object plane | Plane | Infinity | Infinity | | |
| S1 | First lens | Spherical surface | -60.82 | 1.00 | 1.84 | 42.73 |
| S2 | | Spherical surface | 6.24 | 3.36 | | |
| S3 | Second lens | Spherical surface | -6.89 | 3.07 | 1.73 | 54.67 |
| S4 | | Spherical surface | -9.02 | 0.10 | | |
| S5 | Third lens | Spherical surface | 14.80 | 7.18 | 1.91 | 35.25 |
| S6 | | Spherical surface | -38.27 | 0.06 | | |
| ST | Stop | Plane | Infinity | 4.56 | | |
| S7 | Fourth lens Fifth lens | Spherical surface | 17.82 | 4.84 | 1.60 | 65.46 |
| S8/S9 | | Spherical surface | -6.99 | 1.38 | 1.95 | 17.94 |
| S10 | | Spherical surface | -22.31 | 4.60 | | |
| S11 | Sixth lens | Aspheric surface | 10.75 | 5.63 | 1.81 | 40.73 |
| S12 | | Aspheric surface | 35.23 | 0.33 | | |
| S13 | Filter | Plane | Infinity | 0.50 | 1.52 | 64.20 |
| S14 | | Plane | Infinity | 2.79 | | |
| S15 | Protective glass | Plane | Infinity | 0.50 | 1.52 | 64.20 |
| S16 | | Plane | Infinity | 0.13 | | |
| S17 | Imaging plane | Plane | Infinity | | | |

The parameters of surfaces of the aspheric lenses in the optical lens provided in Embodiment 3 of the present disclosure are shown in Table 3-2.

Table 3-2

| Surface No. | K | A | B | C | D | E | F |
|---|---|---|---|---|---|---|---|
| S11 | -1.32 | 0.00E+00 | 3.53E-05 | -2.49E-07 | 2.51E-08 | -5.86E-10 | 3.32E-12 |
| S12 | 6.82 | 0.00E+00 | -1.80E-04 | -3.44E-06 | 5.44E-08 | -7.28E-10 | 6.34E-12 |

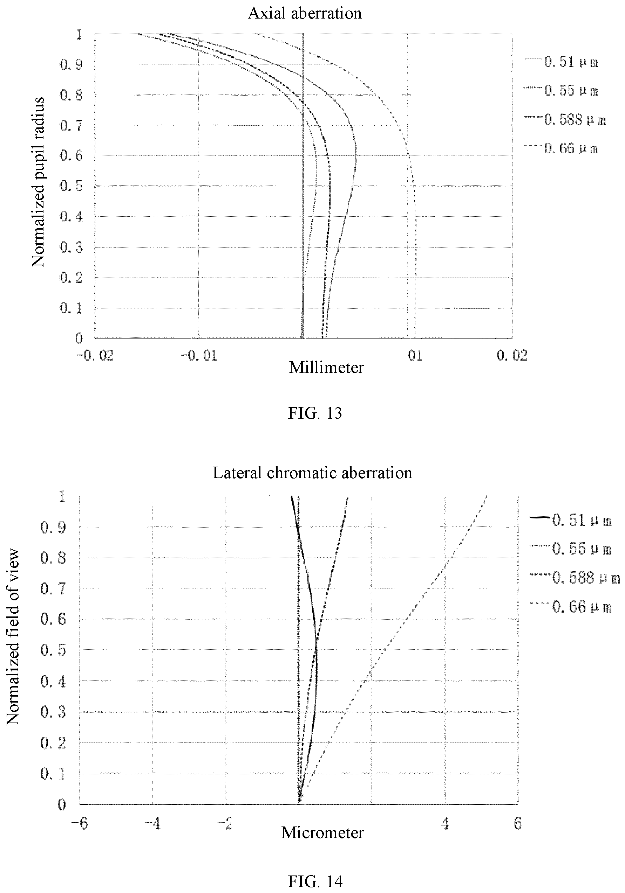

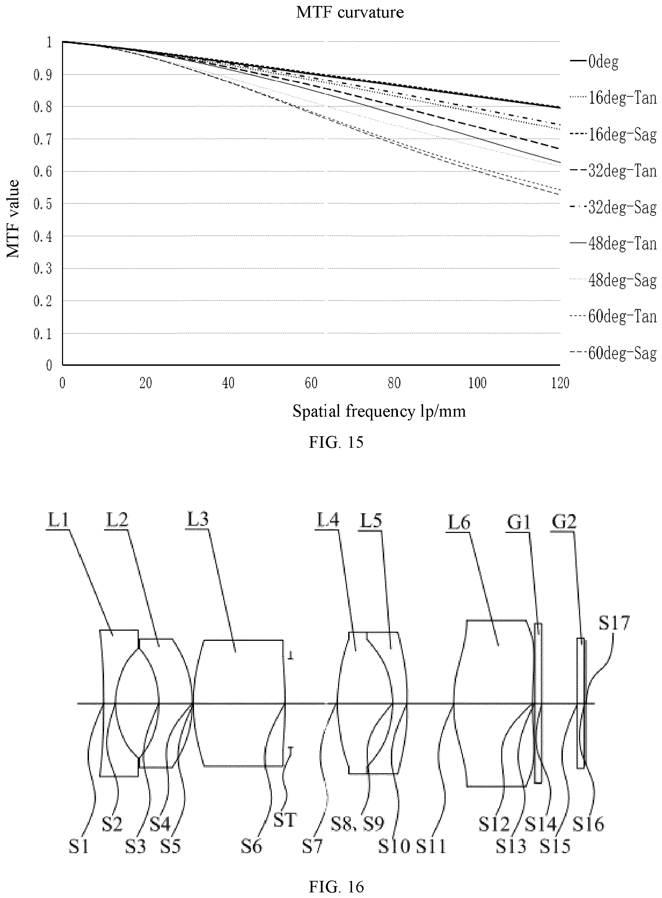

In the embodiment, the field curvature curves of the optical lens are shown in FIG. 12, the axial aberration curves of the optical lens are shown in FIG. 13, the lateral chromatic aberration curves of the optical lens are shown in FIG. 14, and the MTF curves of the optical lens are shown in FIG. 15.

The field curvature curves of Embodiment 3 are illustrated in FIG. 12, which represent curvature degrees of light at different wavelengths on a meridional plane and a sagittal plane. The horizontal axis represents an offset (unit: millimeter), and the vertical axis represents a half field of view (unit: degree (°)). It can be seen from the graph that the field curvatures of the meridional plane and the sagittal plane are within ±0.03 mm, which shows that the field curvatures of the optical lens are well corrected.

The axial aberration curves of Embodiment 3 are illustrated in FIG. 13, which represent aberrations on the optical axis at the imaging plane. The horizontal axis represents the axial aberration (unit: millimeter), and the vertical axis represents the normalized pupil radius. It can be seen from the graph that an offset of the axial aberration is within ±0.02 mm, which shows that optical lens can effectively correct the axial aberration thereof.

The lateral chromatic aberration curves of Embodiment 3 are illustrated in FIG. 14, which represent chromatic aberrations of various wavelengths, relative to a center wavelength (0.55 $\mu$m), at different image heights on the imaging plane. The horizontal axis represents the lateral chromatic aberrations (unit: micrometer) of each wavelength relative to the center wavelength, and the vertical axis represents a normalized field of view. It can be seen from the graph that the lateral chromatic aberrations of the longest wavelength and the shortest wavelength are all within ±6 $\mu$m, which shows

that the optical lens can effectively correct the chromatic aberration of the edge field of view and the secondary spectrum of the entire imaging plane.

The MTF curves of Embodiment 3 are illustrated in FIG. 15, which represent imaging modulation of the optical lens at different spatial frequencies and different fields of view. The horizontal axis represents spatial frequency (unit: lp/mm), and the vertical axis represents MTF value. It can be seen from the graph that the MTF values in the embodiment are all above 0.5 in the full field of view. In a range of (0-120) lp/mm, the MTF curves uniformly and smoothly decrease from the center to the edge field of view. A good imaging quality and a good detail resolution capability are all enabled at either a low frequency or a high frequency.

EMBODIMENT 4

Referring to FIG. 16, the structure of the optical lens provided in Embodiment 4 of the present disclosure is illustrated. From an object side to an imaging plane along an optical axis, the optical lens sequentially includes: a first lens L1, a second lens L2, a third lens L3, a stop ST, a fourth lens L4, a fifth lens L5, a sixth lens L6, a filter G1 and a protective glass G2.

The first lens L1 has a negative refractive power. The object side surface S1 of the first lens L1 is concave, and the image side surface S2 of the first lens is concave. The second lens L2 has a negative refractive power. The object side surface S3 of the second lens L2 is concave, and the image side surface S4 of the second lens L2 is convex. The third lens L3 has a positive refractive power. Both the object side surface S5 and the image side surface S6 of the third lens L3 are convex. Then is the stop ST. The fourth lens L4 has a positive refractive power. Both the object side surface S7 and the image side surface S8 of the fourth lens L4 are convex. The fifth lens L5 has a negative refractive power. The object side surface S9 of the fifth lens L5 is concave, and the image side surface S10 of the fifth lens L5 is convex. The sixth lens L6 has a positive refractive power. The object side surface S11 of the sixth lens L6 is convex, and the image side surface S12 of the sixth lens L6 is concave. The fourth lens L4 and the fifth lens L5 may be cemented to form a cemented lens.

The relevant parameters of each lens in the optical lens provided in Embodiment 4 of the present disclosure are shown in Table 4-1.

Table 4-1

| Surface No. | | Surface type | Radius of curvature R (mm) | Thickness D/ Distance L(mm) | Refractive index Nd | Abbe number Vd |
|---|---|---|---|---|---|---|
| | Object plane | Plane | Infinity | Infinity | | |
| S1 | First lens | Spherical surface | -71.91 | 1.00 | 1.84 | 42.73 |
| S2 | | Spherical surface | 6.46 | 3.59 | | |
| S3 | Second lens | Spherical surface | -7.19 | 2.78 | 1.73 | 54.67 |
| S4 | | Spherical surface | -9.13 | 0.10 | | |
| S5 | Third lens | Spherical surface | 14.61 | 7.57 | 1.91 | 35.25 |
| S6 | | Spherical surface | -48.15 | 0.51 | | |
| ST | Stop | Plane | Infinity | 3.89 | | |
| S7 | Fourth lens Fifth lens | Spherical surface | 14.95 | 4.61 | 1.60 | 65.46 |
| S8/S9 | | Spherical surface | -7.62 | 1.14 | 1.95 | 17.94 |
| S10 | | Spherical surface | -23.08 | 3.96 | | |
| S11 | Sixth lens | Aspheric surface | 14.33 | 6.49 | 1.81 | 40.73 |
| S12 | | Aspheric surface | 44.26 | 0.16 | | |
| S13 | Filter | Plane | Infinity | 0.54 | 1.52 | 64.20 |
| S14 | | Plane | Infinity | 3.02 | | |
| S15 | Protective glass | Plane | Infinity | 0.54 | 1.52 | 64.20 |
| S16 | | Plane | Infinity | 0.14 | | |
| S17 | Imaging plane | Plane | Infinity | | | |

The parameters of surfaces of the aspheric lenses in the optical lens provided in Embodiment 4 of the present disclosure are shown in Table 4-2.

Table 4-2

| Surface No. | K | A | B | C | D | E | F |
|---|---|---|---|---|---|---|---|
| S11 | -1.29 | 0.00E+00 | -1.54E-04 | -2.05E-06 | 5.10E-08 | -1.99E-09 | 1.33E-11 |
| S12 | 11.10 | 0.00E+00 | -3.93E-04 | -5.11E-06 | 3.77E-08 | 3.64E-10 | -3.04E-12 |

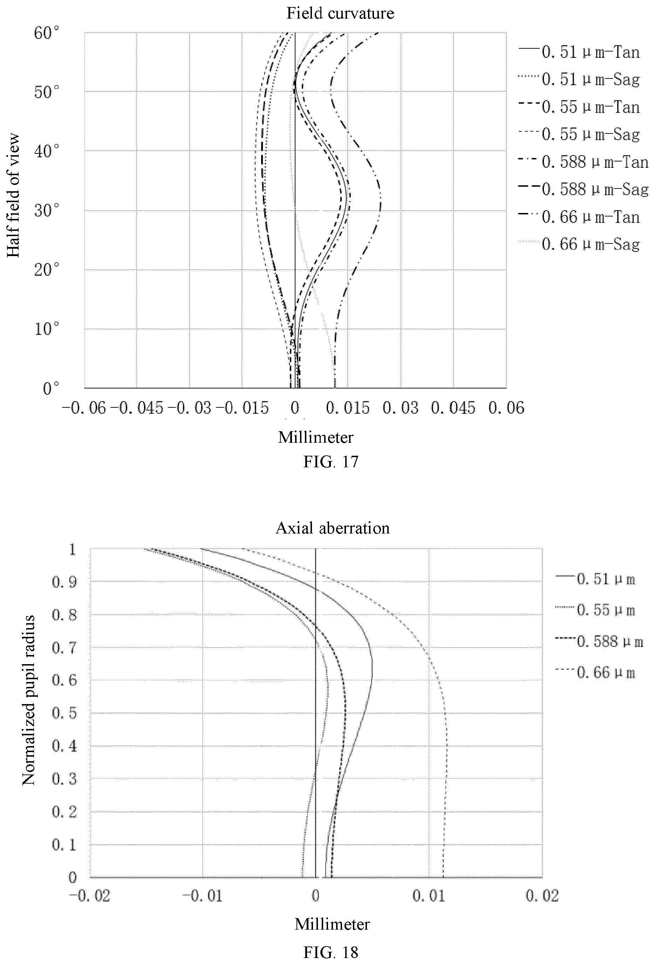

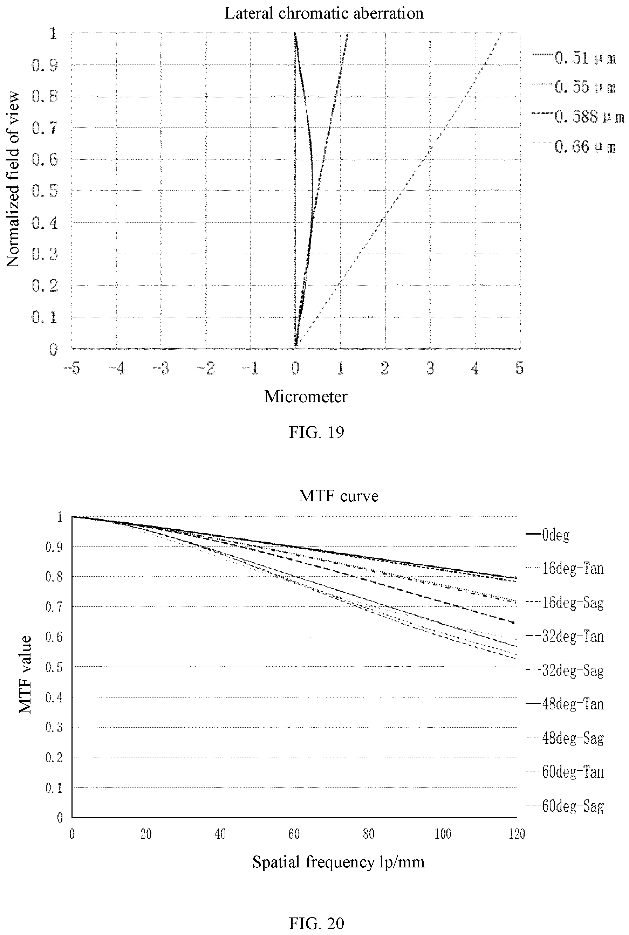

In the embodiment, the field curvature curves of the optical lens are shown in FIG. 17, the axial aberrations curves of the optical lens are shown in FIG. 18, the lateral chromatic aberration curves of the optical lens are shown in FIG. 19, and the MTF curves of the optical lens are shown in FIG. 20.

The field curvature curves of Embodiment 4 are illustrated in FIG. 17, which represent curvature degrees of light at different wavelengths on a meridional plane and a sagittal plane. The horizontal axis represents an offset (unit: millimeter), and the vertical axis represents a half field of view (unit: degree (°)). It can be seen from the graph that the field curvatures of the meridional plane and the sagittal plane are within $\pm 0.03$ mm, which shows that the field curvatures of the optical lens are well corrected.

The axial aberration curves of Embodiment 4 are illustrated in FIG. 18, which represent aberrations on the optical axis at the imaging plane. The horizontal axis represents the axial aberration (unit: millimeter), and the vertical axis represents the normalized pupil radius. It can be seen from the graph that an offset of the axial aberration is within $\pm 0.02$ mm, which shows that optical lens can effectively correct the axial aberration thereof.

The lateral chromatic aberration curves of Embodiment 4 are illustrated in FIG. 19, which represent chromatic aberrations of various wavelengths, relative to a center wavelength (0.55 $\mu$m), at different image heights on the imaging plane. The horizontal axis represents the lateral chromatic aberrations (unit: micrometer) of each wavelength relative to the center wavelength, and the vertical axis represents a normalized field of view. It can be seen from the graph that the lateral chromatic aberrations of the longest wavelength and the shortest wavelength are all within $\pm 5$ $\mu$m, which shows that the optical lens can effectively correct the chromatic aberration of the edge field of view and the secondary spectrum of the entire imaging plane.

The MTF curves of Embodiment 4 are illustrated in FIG. 20, which represent imaging modulation of the optical lens at different spatial frequencies and different fields of view. The horizontal axis represents spatial frequency (unit: lp/mm), and the vertical axis represents MTF value. It can be seen from the graph that the MTF values in the embodiment are all above 0.5 in the full field of view. In a range of (0-120) lp/mm, the MTF curves uniformly and smoothly decrease from the center to the edge field of view. A good imaging quality and a good detail resolution capability are all enabled at either a low frequency or a high frequency.

Referring to Table 5, the optical characteristics of the above embodiments are illustrated, including the effective focal length $f$ of the optical lens, the total track length TTL, the f-number FNO, the true image height IH, the field of view FOV, and values of the expressions corresponding to the embodiments.

Table 5

| Parameters & Expression | Embodiment 1 | Embodiment 2 | Embodiment 3 | Embodiment 4 |
|---|---|---|---|---|
| $f$(mm) | 5.96 | 5.98 | 5.99 | 6.45 |
| TTL(mm) | 40.00 | 40.00 | 40.02 | 40.03 |
| FNO | 1.80 | 1.74 | 1.74 | 1.88 |
| IH (mm) | 10.06 | 9.61 | 9.62 | 10.38 |
| FOV(°) | 120 | 120 | 120 | 120 |
| CRA(°) | 4.86 | 1.75 | 6.08 | 0.21 |
| $f$/IH | 0.59 | 0.62 | 0.62 | 0.62 |
| ΣCT/TTL | 0.66 | 0.57 | 0.61 | 0.62 |
| HD1/D1 | 0.53 | 0.55 | 0.56 | 0.58 |
| $f1/f$ | -1.19 | -1.15 | -1.12 | -1.09 |
| $f2/f$ | -14.35 | -11.88 | -17.06 | -18.11 |
| $f3/f$ | 2.07 | 2.19 | 2.08 | 2.01 |

(continued)

| Parameters & Expression | Embodiment 1 | Embodiment 2 | Embodiment 3 | Embodiment 4 |
|---|---|---|---|---|
| $f4/f$ | 1.82 | 1.52 | 1.50 | 1.40 |
| $f5/f$ | -2.13 | -2.01 | -1.86 | -1.91 |
| $f6/f$ | 3.32 | 3.21 | 2.89 | 3.70 |
| (R1+R2)/(R1-R2) | 0.85 | 0.85 | 0.81 | 0.84 |
| R3/(R4+CT2) | 1.15 | 1.08 | 1.16 | 1.13 |
| R5/$f3$ | 1.21 | 1.22 | 1.19 | 1.13 |
| R10/(R9+$f5$) | 1.14 | 1.33 | 1.23 | 1.16 |
| (R11+R12)/ (R11-R12) | -1.58 | -1.13 | -1.88 | -1.96 |
| CT3/TTL | 0.26 | 0.10 | 0.18 | 0.19 |
| CT4/TTL | 0.12 | 0.11 | 0.12 | 0.12 |
| CT6/TTL | 0.11 | 0.20 | 0.14 | 0.16 |

In summary, in the embodiments of the present disclosure, by reasonably matching lens shapes among the lenses and combining the refractive power of various lenses, a large aperture, a large field of view and a high resolution of the optical lens are enabled.

The foregoing embodiments only illustrate several implementations of the present disclosure, and their descriptions are relatively specific and detailed, but they cannot be construed as limiting the scope of the present disclosure. It is notable for those skilled in the art that, several variations and modifications may be made by those skilled in the art without departing from the scope of the invention as defined by appended claims.

**Claims**

1. An optical lens, comprising a total of six lenses, wherein from an object side to an imaging plane (S17) along an optical axis of the optical lens, the optical lens sequentially comprises:

   a first lens (L1) with a negative focal power, both an object side surface (S1) of the first lens (L1) and an image side surface (S2) of the first lens (L1) being concave;
   a second lens (L2) with a negative focal power, an object side surface (S3) of the second lens (L2) being concave, and an image side surface (S4) of the second lens (L2) being convex;
   a third lens (L3) with a positive focal power, both an object side surface (S5) and an image side surface (S6) of the third lens (L3) being convex;
   a fourth lens (L4) with a positive focal power, both an object side surface (S7) and an image side surface (S8) of the fourth lens (L4) being convex;
   a fifth lens (L5) with a negative focal power, an object side surface (S9) of the fifth lens (L5) being concave, and an image side surface (S10) of the fifth lens (L5) being convex; and
   a sixth lens (L6) with a positive focal power, an object side surface (S11) of the sixth lens (L6) being convex, and an image side surface (S12) of the sixth lens (L6) being concave;
   wherein the fourth lens (L4) and the fifth lens (L5) are cemented to form a cemented lens;
   an effective focal length $f$ of the optical lens and a true image height IH corresponding to a maximum field of view of the optical lens meet an expression: $0.55 < f/IH < 0.65$; and
   an aperture HD1 of the object side surface (S1) of the first lens (L1) corresponding to half of the maximum field of view of the optical lens and an aperture D1 of the object side surface (S1) of the first lens (L1) corresponding to the maximum field of view meet an expression: $0.5 < HD1/D1 < 0.6$.

2. The optical lens as claimed in claim 1, wherein the effective focal length $f$ of the optical lens meets an expression: $5.9mm < f < 6.5mm$.

3. The optical lens as claimed in any one of claims 1-2, wherein the true image height IH corresponding to the maximum field of view of the optical lens meets an expression: $9.5mm < IH < 10.5mm$.

4. The optical lens as claimed in any one of claims 1-3, wherein an f-number of the optical lens meet an expression: 1.7<FNO<1.9.

5. The optical lens as claimed in any one of claims 1-4, wherein the effective focal length $f$ of the optical lens and a focal length $f1$ of the first lens (L1) meet an expression: -1.2<$f1$/$f$<-1.0; and a radius of curvature R1 of the object side surface (S1) of the first lens (L1) and a radius of curvature R2 of the image side surface (S2) of the first lens (L1) meet an expression: 0.8<(R1+R2)/(R1-R2)<0.9.

6. The optical lens as claimed in any one of claims 1-5, wherein the effective focal length $f$ of the optical lens and a focal length $f2$ of the second lens (L2) meet an expression: -18.5<$f2$/$f$<-11.5; and a radius of curvature R3 of the object side surface (S3) of the second lens (L2), a radius of curvature R4 of the image side surface (S4) of the second lens (L2), and a central thickness CT2 of the second lens (L2) meet an expression: 1.05<R3/(R4+CT2)<1.20.

7. The optical lens as claimed in any one of claims 1-6, wherein the effective focal length $f$ of the optical lens, a focal length $f3$ of the third lens (L3), and a radius of curvature R5 of the object side surface (S5) of the third lens (L3) meet expressions: 2.0<$f3$/$f$<2.2 and 1.10<R5/$f3$<1.25.

8. The optical lens as claimed in any one of claims 1-7, wherein the effective focal length $f$ of the optical lens and a focal length $f4$ of the fourth lens (L4) meet an expression: 1.2<$f4$/$f$<1.9.

9. The optical lens as claimed in any one of claims 1-8, wherein the effective focal length $f$ of the optical lens and a focal length $f5$ of the fifth lens (L5), a radius of curvature R9 of the object side surface (S9) of the fifth lens (L5), and a radius of curvature R10 of the image side surface (S10) of the fifth lens (L5) meet expressions: -2.2<$f5$/$f$<-1.8, and 1.10<R10/(R9+f5)<1.35.

10. The optical lens as claimed in any one of claims 1-9, wherein the effective focal length $f$ of the optical lens and a focal length $f6$ of the sixth lens (L6) meet an expression: 2.8<$f6$/$f$<3.9; and a radius of curvature R11 of the object side surface (S11) of the sixth lens (L6) and a radius of curvature R12 of the image side surface (S12) of the sixth lens (L6) meet an expression: - 3.0<(R11+R12)/(R11-R12)<-1.0.

**Patentansprüche**

1. Eine optische Linse umfasst insgesamt sechs Linsen, wobei von einer Objektseite bis zu einer Bildfläche (S17) entlang einer optischen Achse der optischen Linse die optische Linse sequentiell umfasst:

   eine erste Linse (L1) mit negativer Brennkraft, wobei sowohl eine Objektseite (S1) der ersten Linse (L1) als auch eine Bildseite (S2) der ersten Linse (L1) konkav sind;
   eine zweite Linse (L2) mit negativer Brennkraft, wobei eine Objektseite (S3) der zweiten Linse (L2) konkav und eine Bildseite (S4) der zweiten Linse (L2) konvex ist;
   eine dritte Linse (L3) mit positiver Brennkraft, wobei sowohl eine Objektseite (S5) als auch eine Bildseite (S6) der dritten Linse (L3) konvex sind;
   eine vierte Linse (L4) mit positiver Brennkraft, wobei sowohl eine objektseitige (S7) als auch eine Bildseite (S8) der vierten Linse (L4) konvex sind;
   eine fünfte Linse (L5) mit negativer Brennkraft, wobei eine Objektseite (S9) der fünften Linse (L5) konkav und eine Bildseite (S10) der fünften Linse (L5) konvex ist; und
   eine sechste Linse (L6) mit positiver Brennkraft, wobei eine Objektseite (S11) der sechsten Linse (L6) konvex und eine Bildseite (S12) der sechsten Linse (L6) konkav ist;
   wobei die vierte Linse (L4) und die fünfte Linse (L5) zu einer zementierten Linse zementiert werden;
   eine effektive Brennweite $f$ der optischen Linse und eine wahre Bildhöhe IH, die dem maximalen Sichtfeld der optischen Linse entspricht, treffen auf einen Ausdruck: 0,55<$f$/IH<0,65; und
   eine Blende HD1 der Objektseite (S1) der ersten Linse (L1), die der Hälfte des maximalen Sichtfeldes der optischen Linse entspricht, und eine Blende D1 der Objektseite (S1) der ersten Linse (L1), die dem maximalen Sichtfeld entspricht, treffen einen Ausdruck: 0,5<HD1/D1<0,6.

2. Die optische Linse nach Anspruch 1, wobei die effektive Brennweite $f$ der optischen Linse auf einen Ausdruck trifft: 5,9 mm<$f$<6,5 mm.

3. Die optische Linse nach einem der Ansprüche 1-2, wobei die wahre Bildgröße IH, die dem maximalen Sichtfeld der optischen Linse entspricht, auf einen Ausdruck trifft: 9,5 mm<IH<10,5 mm.

4. Die optische Linse nach einem der Ansprüche 1-3, wobei eine f-Zahl der optischen Linse auf einen Ausdruck trifft: 1,7<FNO<1,9.

5. Die optische Linse nach einem der Ansprüche 1-4, wobei die effektive Brennweite $f$ der optischen Linse und eine Brennweite $f1$ der ersten Linse (L1) auf einen Ausdruck treffen: - 1,2<$f1$/$f$<-1,0; und ein Krümmungsradius R1 der Objektseite (S1) der ersten Linse (L1) sowie ein Krümmungsradius R2 der Bildseite (S2) der ersten Linse (L1) treffen einen Ausdruck: 0,8<(R1+R2)/(R1-R2)<0,9.

6. Die optische Linse nach einem der Ansprüche 1-5, wobei die effektive Brennweite $f$ der optischen Linse und eine Brennweite $f2$ der zweiten Linse (L2) auf einen Ausdruck treffen: - 18,5<$f2$/$f$<-11,5, und ein Krümmungsradius R3 der Objektseite (S3) der zweiten Linse (L2), ein Krümmungsradius R4 der Bildseite (S4) der zweiten Linse (L2) und eine zentrale Dicke CT2 der zweiten Linse (L2) treffen einen Ausdruck: 1,05<R3/(R4+CT2)<1,20.

7. Die optische Linse nach einem der Ansprüche 1-6, wobei die effektive Brennweite $f$ der optischen Linse, eine Brennweite $f3$ der dritten Linse (L3) und ein Krümmungsradius R5 der Objektseite (S5) der dritten Linse (L3) auf Ausdrücke treffen: 2,0<$f3$/$f$<2,2 und 1,10<R5/$f3$<1,25.

8. Die optische Linse nach einem der Ansprüche 1-7, wobei die effektive Brennweite $f$ der optischen Linse und eine Brennweite $f4$ der vierten Linse (L4) auf einen Ausdruck treffen: 1,2<$f4$/$f$<1,9.

9. Die optische Linse nach einem der Ansprüche 1-8, wobei die effektive Brennweite $f$ der optischen Linse und eine Brennweite $f5$ der fünften Linse (L5), ein Krümmungsradius R9 der Objektseite (S9) der fünften Linse (L5) und ein Krümmungsradius R10 der Bildseite (S10) der fünften Linse (L5) auf Ausdrücke treffen: -2,2<$f5$/$f$<-1,8 und 1,10<R10/(R9+$f5$)<1,35.

10. Die optische Linse nach einem der Ansprüche 1-9, wobei die effektive Brennweite $f$ der optischen Linse und eine Brennweite $f6$ der sechsten Linse (L6) auf einen Ausdruck treffen: 2,8<$f6$/$f$<3,9; und ein Krümmungsradius R11 der Objektseite (S11) der sechsten Linse (L6) sowie ein Krümmungsradius R12 der Bildseite (S12) der sechsten Linse (L6) treffen einen Ausdruck: - 3,0<(R11+R12)/(R11-R12)<-1,0.

**Revendications**

1. Une lentille optique, comprenant un total de six lentilles, où, du côté objet à un plan d'imagerie (S17) le long d'un axe optique de la lentille optique, la lentille optique comprend séquentiellement :

   une première lentille (L1) avec une puissance focale négative, à la fois une surface côté objet (S1) de la première lentille (L1) et une surface côté image (S2) de la première lentille (L1) étant concaves ;
   une seconde lentille (L2) avec une puissance focale négative, une surface côté objet (S3) de la seconde lentille (L2) concave, et une surface côté image (S4) de la seconde lentille (L2) convexe ;
   un troisième objectif (L3) avec une puissance focale positive, une surface côté objet (S5) et une surface côté image (S6) du troisième objectif (L3) étant convexes ;
   une quatrième lentille (L4) avec une puissance focale positive, une surface côté objet (S7) et une surface côté image (S8) de la quatrième lentille (L4) étant convexes ;
   une cinquième lentille (L5) avec une puissance focale négative, une surface côté objet (S9) de la cinquième lentille (L5) étant concave, et une surface côté image (S10) de la cinquième lentille (L5) convexe ; et
   une sixième lentille (L6) avec une puissance focale positive, une surface côté objet (S11) de la sixième lentille (L6) convexe, et une surface côté image (S12) de la sixième lentille (L6) concave ;
   où la quatrième lentille (L4) et la cinquième lentille (L5) sont cimentées pour former une lentille cimentée ;
   une focale effective $f$ de la lentille optique et une hauteur d'image réelle IH correspondant à un champ de vision maximal de la lentille optique rencontrent une expression : 0,55<$f$/IH<0,65 ; et
   une ouverture HD1 de la surface côté objet (S1) de la première lentille (L1) correspondant à la moitié du champ de vision maximal de la lentille optique et une ouverture D1 de la surface côté objet (S1) de la première lentille (L1) correspondant au champ de vision maximal correspondent à une expression : 0,5<HD1/D1<0,6.

2. La lentille optique selon la revendication 1, où la focale effective $f$ de la lentille optique rencontre une expression : 5,9 mm<$f$<6,5 mm.

3. La lentille optique selon l'une quelconque des revendications 1 à 2, où la hauteur d'image réelle IH correspondant au champ de vision maximal de la lentille optique rencontre une expression : 9,5 mm<IH<10,5 mm.

4. La lentille optique selon l'une quelconque des revendications 1 à 3, où un chiffre $f$ de la lentille optique correspond à une expression : 1,7<FNO<1,9.

5. La lentille optique selon l'une quelconque des revendications 1 à 4, où la focale effective $f$ de la lentille optique et la focale $f1$ de la première lentille (L1) rencontrent une expression : - 1,2<$f1/f$<-1,0 ; et un rayon de courbure R1 de la surface côté objet (S1) de la première lentille (L1) et un rayon de courbure R2 de la surface côté image (S2) de la première lentille (L1) rencontrent une expression : 0,8<(R1+R2)/(R1-R2)<0,9.

6. La lentille optique selon l'une quelconque des revendications 1 à 5, où la focale effective $f$ de la lentille optique et la focale $f2$ de la seconde lentille (L2) rencontrent une expression : - 18,5<$f2/f$<-11,5 ; et un rayon de courbure R3 de la surface côté objet (S3) du seconde lentille (L2), un rayon de courbure R4 de la surface côté image (S4) du seconde lentille (L2), et une épaisseur centrale CT2 du seconde lentille (L2) correspondent à une expression : 1,05<R3/(R4+CT2)<1,20.

7. La lentille optique selon l'une quelconque des revendications 1 à 6, où la focale effective $f$ de la lentille optique, une focale $f3$ de la troisième lentille (L3) et un rayon de courbure R5 de la surface côté objet (S5) de la troisième lentille (L3) rencontrent des expressions : 2.0<$f3/f$<2.2 et 1.10<R5/$f3$<1.25.

8. La lentille optique selon l'une quelconque des revendications 1 à 7, où la focale effective $f$ de la lentille optique et la focale $f4$ de la quatrième lentille (L4) correspondent à une expression : 1,2<$f4/f$<1,9.

9. La lentille optique selon l'une quelconque des revendications 1 à 8, où la focale effective $f$ de la lentille optique et une focale $f5$ de la cinquième lentille (L5), un rayon de courbure R9 de la surface côté objet (S9) de la cinquième lentille (L5), et un rayon de courbure R10 de la surface côté image (S10) de la cinquième lentille (L5) rencontrent les expressions suivantes : -2,2<$f5/f$<-1,8, et 1,10<R10/(R9+$f5$)<1,35.

10. La lentille optique selon l'une quelconque des revendications 1 à 9, où la focale effective $f$ de la lentille optique et une focale $f6$ de la sixième lentille (L6) rencontrent une expression : 2,8<$f6/f$<3,9 ; et un rayon de courbure R11 de la surface côté objet (S11) du sixième lentille (L6) et un rayon de courbure R12 de la surface côté image (S12) du sixième lentille (L6) rencontrent une expression : -3,0<(R11+R12)(R11-R12)<-1,0.

FIG. 1

Field curvature

Legend:
—— 0.51 μm-Tan
········ 0.51 μm-Sag
--- 0.55 μm-Tan
---- 0.55 μm-Sag
-··- 0.588 μm-Tan
—— 0.588 μm-Sag
-··- 0.66 μm-Tan
········ 0.66 μm-Sag

Millimeter

FIG. 2

Axial aberration

FIG. 3

Lateral chromatic aberration

FIG. 4

18

MTF curve

FIG. 5

FIG. 6

Field curvature

FIG. 7

Axial aberration

FIG. 8

Lateral chromatic aberration

FIG. 9

MTF curvature

FIG. 10

FIG. 11

Field curvature

— 0.51 μm-Tan
······· 0.51 μm-Sag
--- 0.55 μm-Tan
----- 0.55 μm-Sag
-·- 0.588 μm-Tan
--- 0.588 μm-Sag
-·- 0.66 μm-Tan
········ 0.66 μm-Sag

FIG. 12

Axial aberration

FIG. 13

Lateral chromatic aberration

FIG. 14

MTF curvature

FIG. 15

FIG. 16

Field curvature

FIG. 17

Axial aberration

FIG. 18

Lateral chromatic aberration

FIG. 19

MTF curve

FIG. 20

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 204256248 U